# EUROPÄISCHE PATENTSCHRIFT

(11) **EP 1 901 148 B1**
(45) Veröffentlichungstag und Bekanntmachung des Hinweises auf die Patenterteilung: **19.12.2012**
(21) Anmeldenummer: 07014774.9
(22) Anmeldetag: 27.07.2007
(51) Int. Cl.: G05B 23/02, G05B 19/048

(54) **Anzeigesystem zur grafischen Darstellung von Alarmmeldungen einer technischen Anlage oder eines technischen Prozesses**
Display system for graphic display of alarm signals from a technical facility or a technical process
Système d'affichage destiné à la représentation graphique de signaux d'alarmes d'une installation technique ou d'un processus technique

(30) Priorität: 16.09.2006 DE 102006043579
(43) Veröffentlichungstag der Anmeldung: 19.03.2008
(73) Patentinhaber: ABB Technology AG, 8050 Zürich (CH)
(72) Erfinder: Hollender, Martin, Dr., 69120 Heidelberg (DE); Beuthel, Carsten, Dr.-Ing., 69514 Laudenbach (DE)
(74) Vertreter: Miller, Toivo

(56) Entgegenhaltungen:
- EP-A2- 0 389 132
- EP-A2- 0 482 523
- US-A1- 2005 216 826

## Beschreibung

Die Erfindung betrifft ein Anzeigesystem und ein Verfahren zur grafischen Darstellung von Alarmmeldungen aus Messwerten einer technischen Anlage oder eines technischen Prozesses, insbesondere in Kraftwerken oder Ölraffinerien, gemäß den Ansprüchen 1 und 6 und ist insbesondere geeignet zur grafischen Darstellung von Prozessalarmen.

In technischen Anlagen, wie beispielsweise in Energieerzeugungsanlagen oder Anlagen der chemischen Industrie, wird eine Vielzahl von Alarmmeldungen, auch als Massenalarme bezeichnet, erzeugt. Die Alarmmeldungen, welche beispielsweise kritische Prozesszustände anzeigen, werden üblicherweise mit einer Vielzahl Anzeigeelemente dargestellt, die zumeist direkt den entsprechenden Messwerten zugeordnet sind

Die Prozessmesswerte werden zumeist systematisch nach Aufgabe, Art und Ort gekennzeichnet, beispielsweise mittels des weltweit in Kraftwerken üblichen Kraftwerk-Kennzeichnungssystem "KKS".

Obwohl viele technische Anlagen der chemischen Industrie oder der Energieerzeugung bezüglich ihrer Funktion einen ähnlichen Grundaufbau aufweisen, unterscheiden sie sich jedoch im Detail erheblich, so dass die auf einem Anlagen-Kennzeichnungssystem beruhenden Bezeichner und Komponenten für die Messstellen der jeweiligen Prozessmesswerte für jede Anlage unterschiedlich sind.

Derzeit verwendete Alarmanzeigen benötigen für ihre Darstellung somit eine projektspezifische Konfigurierung, da ein spezifischer Prozessmesswert über seine Kennzeichnung jeweils mit einem entsprechenden Anzeigeelement verbunden werden muss.

Änderungen innerhalb der technischen Anlage bzw. des technischen Prozesses werden üblicherweise isoliert mit dedizierten (zugeordneten) Anzeigeelementen oder textuell als Alarmzeile dargestellt. Diese Vorgehensweise ist nur sinnvoll, wenn eine geringe Anzahl von Informationen also nur wenige Alarmmeldungen angezeigt werden. Sobald aber eine Vielzahl paralleler Informationen darzustellen sind, ist diese Art der Anzeige unvorteilhaft, da der Anlagenfahrer durch die Vielzahl detaillierter Informationen keinen Überblick über die Gesamtsituation der Anlage gewinnen kann.

Um eine Massenalarmanzeige grafisch darzustellen wird beispielsweise eine Vielzahl von Anzeigenelementen so angeordnet, dass ihr Gesamtbild vom Anlagenfahrer für eine Mustererkennung genutzt werden kann. Dabei muss jedoch jedes einzelne Anzeigenelement separat konfiguriert, normiert und entsprechend der Anlagentopologie in der Massenalarmanzeige angeordnet werden, so dass die Massenalarmanzeige beim Auftreten von Störungen in der Anlage spezifische erzeugt. Diese Darstellungsform der Massenalarmanzeige ist mit einem erheblichen Planungsaufwand verbunden, da jeder Messwert einzeln zu verdrahten ist.

In der EP 0 482 523 A2 ist eine Mehrzweckbedienerschnittstelle zur Anzeige von Fehlerdiaqnoseerqebnissen in intelligenten Prozesssteuerungssystemen beschrieben, bei der Anlagen- bzw. Prozesskomponenten in einer hierarchischen Struktur dargestellt sind.

Die US 2005216826 beschreibt ein Verfahren, mit welchem die komplexen Zusammenhänge bei der Darstellung von Massenalarme ohne großen Konfigurierungsaufwand visualisierbar sind. Das beschriebene Verfahren wird zur Analyse von Prozesszusammenhängen verwendet. Prozesszustände sind jedoch nicht darstellbar.

Weitere Nachteile der gegenwärtig verwendeten grafischen Alarmanzeigen sind neben dem vorab beschriebenen hohen Konfigurierungsaufwand eine isolierte Betrachtung und Darstellung der einzelnen Alarmmeldungen. Es existieren keine vorkonfigurierten Anzeigen, welche für eine Vielzahl von Anlagen ohne eine vorherige Anpassung funktionsfähig sind.

Der Erfindung liegt demgemäss die Aufgabe zugrunde, ein Anzeigesystem und ein Verfahren zur grafischen Darstellung von Alarmmeldungen aus Messwerten einer technischen Anlage oder eines technischen Prozesses, insbesondere zur Darstellung von Prozessalarmen anzugeben, wodurch vorgenannte Nachteile des Standes der Technik überwunden werden.

Diese Aufgabe wird erfindungsgemäß durch ein Anzeigesystem mit den in Anspruch 1 angegebenen Merkmalen gelöst. Vorteilhafte Ausgestaltungen, Verbesserungen des erfindungsgemäßen Anzeigesystems und ein entsprechendes Verfahren zur grafischen Darstellung von Alarmmeldungen aus Messwerten einer technischen Anlage oder eines technischen Prozesses sind in weiteren Ansprüchen und in der Beschreibung angegeben.

Erfindungsgemäß umfasst das Anzeigesystem zur grafischen Darstellung von Alarmmeldungen aus Messwerten einer technischen Anlage oder eines technischen Prozesses eine Verarbeitungseinrichtung, in der hierarchisch strukturierte Kennzeichnungen Messstellen der Messwerte abgelegt sind.

Die Verarbeitungseinrichtung zerlegt die hierarchisch strukturierten Kennzeichnungen der Messstellen in Hierarchiestufen unterschiedlicher Wertigkeit, wählt die Kennzeichnung der Hierarchiestufe der jeweiligen Messstelle mit der jeweils höchsten Wertigkeit aus und übermittelt die ausgewählten Kennzeichnungen der jeweiligen Messstelle einer vorkonfigurierten Massenalarmanzeigeeinheit, wobei die ausgewählten Kennzeichnungen einem entsprechend gekennzeichneten Bereich innerhalb eines Übersichtsbildes der Anlage oder des' Prozesses der vorkonfigurierten Massenalarmanzeigeeinheit zuordenbar sind und die aus den Messwerten generierten Alarmmeldungen unter Berücksichtigung der erzeugten Zuordnung der ausgewählten Kennzeichnungen der jeweiligen Messstelle zum entsprechend gekennzeichneten Bereich innerhalb des Übersichtsbildes der Anlage oder des Prozesses grafisch darstellbar sind.

Die Massenalarmeinzeigeeinheit des erfindungsgemäßen Anzeigesystems ist vorzugsweise dafür vorgesehen, eine Vielzahl von Prozessalarmen, auch als Massenalarme bezeichnet, anzuzeigen und ein Gesamtbild zu erzeugen, wenn mehrere Alarme über die Prozessdynamik miteinander verknüpft sind.

In einer Ausführungsform des erfindungsgemäßen Anzeigesystems wird die Massenalarmanzeigeeinheit so vorkonfiguriert, dass ein mittels der Massenalarmanzeigeeinheit dargestelltes Anlagenbild in Bereiche eingeteilt ist, wobei diese Bereiche auch einander überlappen können. Jedem dieser Bereiche wird ein Hauptschlüssel, beispielsweise eine KKS- Hauptgruppe, zugewiesen und festgelegt, mit welchen visuellen Effekten die Bereiche des Anlagenbildes anstehende Prozesszustände visualisieren sollen. Zur dynamischen Visualisierung des Gesamtbildes sind verschiedensten Effekte moderner Computergraphik geeignet, wie beispielsweise ein Anfärben eines Schwarz-Weiß-Bildes, die Darstellung der Bereiche mittels Unschärfen, einem dem Aufhellen bzw. Verdunkeln der entsprechenden Bereiche oder einem Morphing (computergenerierter Spezialeffekt, bei dem beispielsweise zwischen zwei Einzelbildern Zwischenübergänge berechnet und als nahtloser Übergang dargestellt werden) von Bitmaps.

Dadurch, dass nur KKS-Hauptgruppen verwendet werden, ist eine Gruppierung der Alarmmeldungen ohne einen zusätzlichen Aufwand ausführbar, so dass die Alarmmeldungen nur noch als Gruppe auftreten und nicht mehr als Einzelwert angezeigt werden.

Weiterhin ist vorgesehen, die anstehenden Alarmmeldungen unterschiedlich zu wichten, so dass beispielsweise zwei Alarme mittlerer Priorität die gleiche optische Wirkung in ihrer Darstellung zeigen wie ein Alarm mit hoher Priorität.

In einem weiteren Ausführungsbeispiel der Erfindung ist vorgesehen, die Bereiche in einem Anlagenbild, in denen viele Temperaturalarme auftreten grafisch so zu hinterlegen, dass diese Bereiche über ein so genanntes "schmelzen" darstellbar sind.

Der jeweilige visuelle Effekt wird nach einer festzulegenden Abbildungsvorschrift in die entsprechenden Bereiche des grafischen Anlagenbildes übertragen. Beispiele für solche Abbildungsvorschriften sind
- die Anzahl der Alarme pro Zeitintervall in der entsprechenden Hauptgruppe,
- die Anzahl der manuellen Eingriffe Zeitintervall, oder
- die Priorität des aktuell anstehenden Alarms mit der höchsten Priorität

Weitere Vorteile der Erfindung beruhen darauf, dass die Zuordnung der Kennzeichnung der Messstellen zu den Bereichen des Übersichtsbildes für eine Vielzahl ähnlicher Anlagen gültig ist, da viele Anlagen auf einem hohen Abstraktionslevel einen gleichen oder ähnlichen Aufbau haben. Somit ist es möglich, vorkonfigurierten Anzeigen auszuliefern, die für eine Vielzahl von Anlagen ohne jede Anpassung sofort funktionieren.

Für den Bediener der technischen Anlage werden durch die visuell ansprechenden Computergraphikeffekte in bestimmten Bereichen im Übersichtsbild komplexe Prozesszustände intuitiv erfassbar, da die holistische (ganzheitliche) Darstellung der Alarmmeldungen der Anlage oder des Prozesses im Anlagenübersichtsbild besser an die menschliche Wahrnehmung angepasst ist als die übliche isolierte Betrachtung von Einzelalarmmeldungen.

Ein weiterer Vorteil des erfindungsgemäßen Systems beruht darauf, dass der projektspezifische Konfigurierungsaufwand während der Planungsphase der Anlage stark reduziert wird oder vollständig entfällt.

Das Verfahren mit dem die Aufgabe weiterhin gelöst wird, ist dem Anspruch 6 zu entnehmen. Dabei wird den Messstellen der Messwerte der technischen Anlage oder des technischen Prozesses jeweils eine hierarchisch strukturierte Kennzeichnung zugewiesen und die hierarchisch strukturierten Kennzeichnungen der Messstellen werden in einer Verarbeitungseinrichtung abgelegt.

Mittels der Verarbeitungseinrichtung werden in einem ersten Schritt die hierarchisch strukturierten Kennzeichnungen der Messstellen jeweils in Hierarchiestufen unterschiedlicher Wertigkeit zerlegt. In einem weiteren Schritt wird die Kennzeichnung der Hierarchiestufe der jeweiligen Messstelle mit der höchsten Wertigkeit ausgewählt und die ausgewählten Kennzeichnungen der Messstellen werden einer vorkonfigurierten Massenalarmanzeigeeinheit übermittelt.

Die ausgewählten und an die vorkonfigurierte Massenalarmanzeigeeinheit übermittelten Kennzeichnungen werden in einem nachfolgenden Schritt jeweils einem entsprechend gekennzeichneten Bereich innerhalb eines Übersichtsbildes der Anlage oder des Prozesses der vorkonfigurierten Massenalarmanzeigeeinheit zugeordnet und die aus den Messwerten generierten Alarmmeldungen werden in einem letzten Schritt unter Berücksichtigung der erzeugten Zuordnung der ausgewählten Kennzeichnungen der Messstellen zum entsprechend gekennzeichneten Bereich innerhalb des Übersichtsbildes der Anlage oder des Prozesses grafisch dargestellt, so dass auf der Massenalarmanzeigeeinheit eine prozesszustandsgetriebene dynamisch generierte visuell anspruchsvolle Computergrafik gezeigt wird.

Gegenüber dem Stand der Technik, bei dem die Prozesszustände über eine Vielzahl isolierter Anzeigeelemente visualisiert werden, sind mit dem erfindungsgemäßen Verfahren in einem Übersichtsbild, beispielsweise einem Gesamtbild der technischen Anlage oder des technischen Prozesses bestimmte Bereiche visuell veränderbar, beispielsweise mittels einer Einfärbung oder einer Musterüberlagerung.

Mit dem erfindungsgemäßen Verfahren ist auch vorgesehen, herkömmliche Anzeigesysteme zu ergänzen.

Das erfindungsgemäße System und Verfahren werden vorzugsweise in Kraftwerken oder Ölraffinerien eingesetzt und sind insbesondere geeignet zur Darstellung von Prozessalarmen.

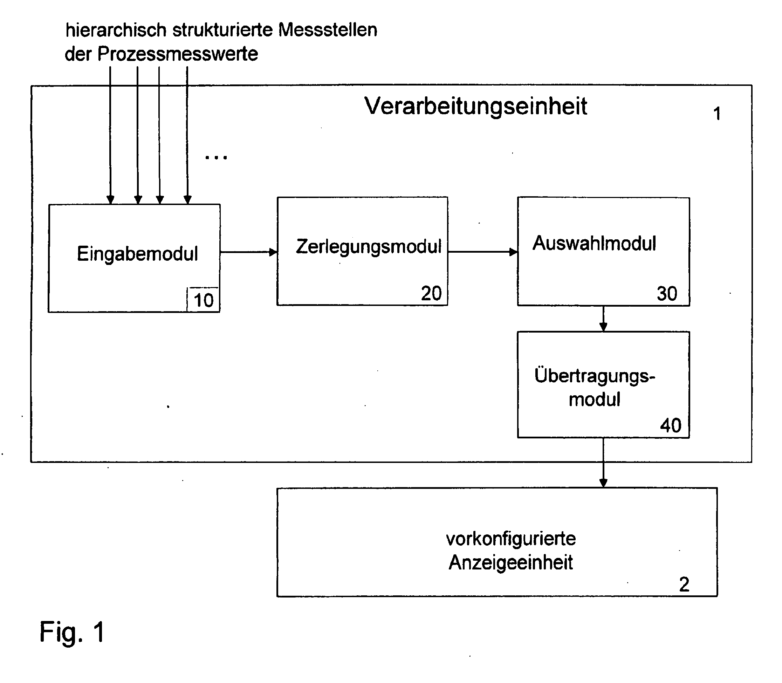

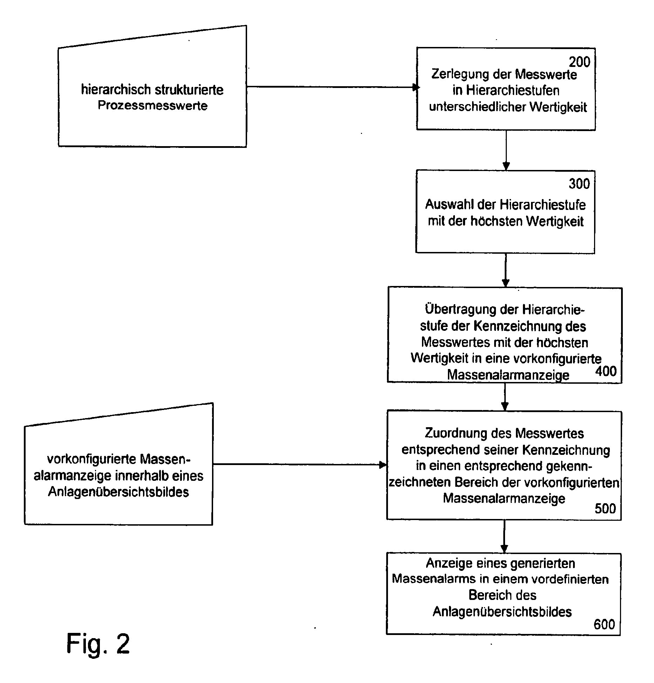

Anhand des in den Figuren 1 und 2 dargestellten Ausführungsbeispieles sollen die Erfindung sowie vorteilhafte Ausgestaltungen und Verbesserungen der Erfindung näher erläutert und beschrieben werden.

Es zeigen:
- **Fig.** 1: eine Ausführungsform des erfindungsgemäßen Anzeigesystems zur grafischen Darstellung von Massenalarmen aus Messwerten eines Kraftwerkes,
- **Fig.** 2: einen beispielhaften Verfahrensablauf zur grafischen Darstellung der Massenalarme des Kraftwerkes, und
- **Fig.** 3: ein als Bitmap dargestelltes Anlagenübersichtsbild.

In **Fig. 1** ist eine Ausführungsform des erfindungsgemäßen Anzeigensystems zu grafischen Darstellung von Alarmmeldungen aus Messwerten eines Kraftwerkes gezeigt, wobei die Messstellen der Messwerte jeweils eine hierarchisch strukturierte Kennzeichnung aufweisen.

Erfindungsgemäß umfasst das Anzeigensystem zur grafischen Darstellung der Alarmmeldungen aus der Kraftwerksanlage eine Verarbeitungseinrichtung 1 und eine vorkonfigurierte Massenalarmanzeigeeinheit 2.

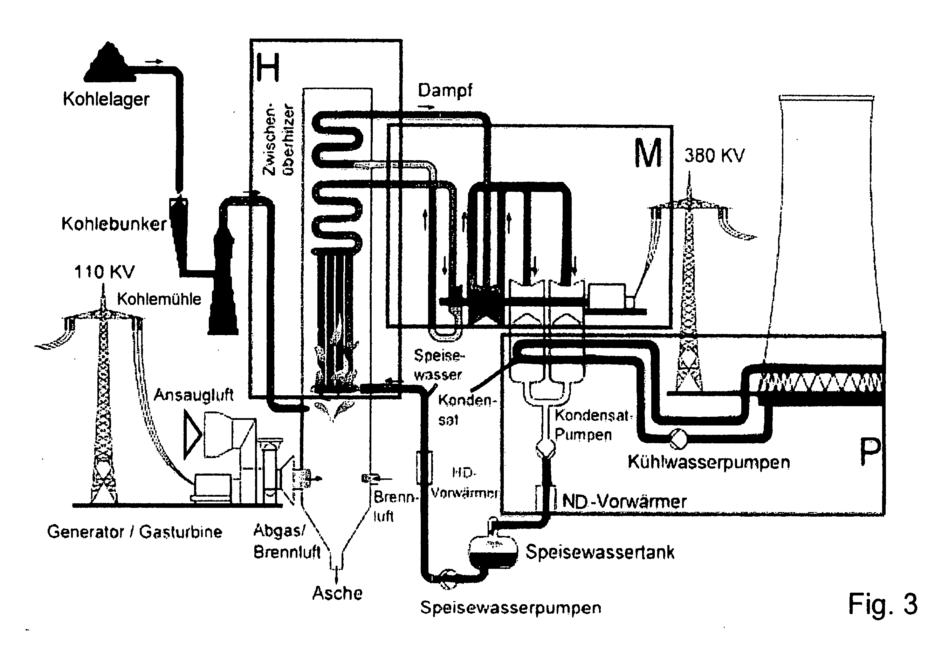

Die vorkonfigurierte Massenalarmanzeigeeinheit 2 stellt ein Anlagenübersichtsbild der Kraftwerksanlage, beispielsweise des Wasser-Dampf-Kreislaufes, dar. Das Übersichtsbild ist in einzelne Bereiche, wie den Turbinenbereich, den Speisewasserbereich, das Kondensatsystem, den Bereich der Zwischenüberhitzer und den Bereich der Vorwärmer gegliedert. Die Bereiche des Übersichtsbildes werden dahingehend vorkonfiguriert, dass jedem Bereich eine eindeutige Kennzeichnung entsprechend dem KKS-System zugeordnet ist. Ein beispielhaftes Anlagenübersichtsbild zeigt die **Fig.** 3.

Auch die Messstellen der Messwerte sind jeweils mit einer eindeutigen hierarchisch strukturierten Kennzeichnung nach den KKS-System versehen, welche in ein Eingabemodul 10 der Verarbeitungseinrichtung 1 übertragbar sind. Das Eingabemodul 10 wirkt mit einem Zerlegungsmodul 20 zusammen, das die hierarchisch strukturierten Kennzeichnungen der Messstellen in Hierarchiestufen unterschiedlicher Wertigkeit zerlegt und einem Auswahlmodul 30 zuführt. Das Auswahlmodul 30 wählt die Kennzeichnung der Hierarchiestufe der jeweiligen Messstelle mit der höchsten Wertigkeit aus und überträgt mittels eines Übertragungsmoduls 40 die ausgewählten Kennzeichnungen der Messstellen zur vorkonfigurierten Massenalarmanzeigeeinheit 2.

Die Massenalarmanzeigeeinheit 2 ordnet die ausgewählten Kennzeichnungen der entsprechenden Bereichskennzeichnung des jeweiligen Bereiches innerhalb des Anlagenübersichtsbildes der vorkonfigurierten Massenalarmanzeigeeinheit 2 zu. Eine Kennzeichnung der Messstelle mit der jeweils höchsten Wertigkeit beruht in der vorab beschriebenen Erfindung beispielsweise auf dem KKS-Kennzeichen für das Niveau im Speisewasserbehälter.

Die aus den Messwerten generierten Alarmmeldungen sind nunmehr unter Berücksichtigung der erzeugten Zuordnung der ausgewählten Kennzeichnungen der Messstellen zum entsprechend gekennzeichneten Bereich innerhalb des Übersichtsbildes der Anlage oder des Prozesses grafisch darstellbar und der Messwert im entsprechenden Bereich des Übersichtsbildes ist visuell veränderbar, beispielsweise eingefärbt oder unscharf, wenn für den jeweiligen Messwert eine Alarmmeldung ansteht.

Für eine Vielzahl von anstehenden Alarmmeldungen in einem bestimmten Bereich des Übersichtsbildes wird somit eine Darstellungsform erreicht, die es erlaubt, ein herkömmliches Anzeigesystem mittels der auf diese Weise erzeugten bildhaften Massenalarmanzeigen innerhalb der verschiedenen Bereiches der Anlage oder des Prozesses zu ergänzen, so dass für den Anlagenfahrer die komplexen Prozesszustände der Anlage besser erfassbar sind.

In **Fig.** 2 ist ein beispielhafter Verfahrensablauf zur grafischen Darstellung der Massenalarme des Kraftwerkes gezeigt.

Das erfindungsgemäße Verfahren beschreibt eine Anzahl von Schritten, mit welchen die grafische Darstellung der Alarmmeldungen mittels des erfindungsgemäßen A-larmanzeigensystems ausgeführt wird.

In einem ersten Schritt 100 werden die hierarchisch strukturierten Kennzeichnungen der Messstellen der Anlage in die Verarbeitungseinrichtung 1 übertragen und in einem zweiten Schritt 200 werden die hierarchisch strukturierten Kennzeichnungen der Messstellen in Hierarchiestufen mit unterschiedlicher Wertigkeit zerlegt.

Nach einer Auswahl der Kennzeichnung der Hierarchiestufe der jeweiligen Messstelle mit der höchsten Wertigkeit in einem dritten Schritt 300 werden die ausgewählten Kennzeichnungen Messstellen der vorkonfigurierten Massenalarmanzeigeeinheit 2 in einem vierten Schritt 500 übermittelt.

In einem weiteren Schritt 500 werden die ausgewählten und an die vorkonfigurierte Massenalarmanzeigeeinheit 2 übermittelten Kennzeichnungen einem entsprechend gekennzeichneten Bereich innerhalb eines Übersichtsbildes der Anlage der vorkonfigurierten Massenalarmanzeigeeinheit 2 zugeordnet.

Die aus den Messwerten generierten Alarmmeldungen werden in einem letzten Schritt 600 unter Berücksichtigung der erzeugten Zuordnung der ausgewählten Kennzeichnungen der Messstellen zum entsprechend gekennzeichneten Bereich innerhalb des Übersichtsbildes entsprechend ihrer Relevanz für die Funktionsfähigkeit der Anlage mit einem entsprechenden Computergraphikeffekt visualisiert, beispielsweise eingefärbt.

Eine Ausgestaltung des erfindungsgemäßen Verfahrens basiert darauf, dass das Gesamtbild der Anlage als eine Bitmap, die in der Regel eine Zeichnung oder ein Foto der Anlage ist, auf der Massenalarmanzeigeeinheit 2 darstellt wird, was in **Fig.** 3 als Anlagenübersichtsbild gezeigt ist, wobei das Bitmap in eine Vielzahl von Bereichen H, M, P aufgeteilt wird, die Bereiche jeweils separat behandelt werden und einander auch überlappen können. Jedem dieser Bereiche H, M, P wird eine bestimmte Kennzeichnung, beispielsweise eine KKS Hauptgruppe, zugewiesen, die für eine Vielzahl von Anlagen gültig ist. Somit ergibt sich in vorteilhafter Weise die Möglichkeit, vorkonfigurierte Anzeigen auszuliefern, die keine projektspezifische Anpassung mehr benötigen.

Zur dynamischen Visualisierung des Gesamtbildes wird ein computergestütztes Bildverarbeitungsverfahren verwendet, welches auf einer parametrierbareren Grafiktransformation beruht. Mit dieser als Morphing bekannten Graphiktransformation wird ein Bitmap 1 in ein anderes Bitmap 2 übergeblendet, indem zwischen zwei Einzelbildern, dem Bitmap 1 und dem Bitmap 2, Zwischenübergänge berechnet und diese als nahtlose Übergänge dargestellt werden.

Ein Beispiel hierfür ist eine Normierung einer Messgröße, wie beispielsweise der A-larmrate auf einen Bereich x = [0 ... 1]. Das Bitmap 1 wird gezeigt, wenn x = 0 ist. Das Bitmap 2 wird gezeigt, wenn x = 1 ist. Die Zwischenstufen zwischen Bitmap 1 und Bitmap 2 werden nach folgender Formel bestimmt: x * bitmap2 + (1-x) * Bitmap1 mit 0<x>1.

In einer weiteren Ausgestaltung der Erfindung wird festgelegt, mit welchen visuellen Effekten die Bereiche Prozesszustände visualisieren sollen. Die visuellen Effekte werden nach einer festzulegenden Abbildungsvorschrift in den entsprechenden Bereich H, M, P der Bitmap oder des Anlagenfotos eingebracht, wobei die Abbildungsvorschriften beispielsweise die Anzahl der Alarme pro Zeitintervall in der entsprechenden Hauptgruppe, die Anzahl der manuellen Eingriffe pro Zeitintervall oder die Priorität des aktuell anstehenden Alarms mit der höchsten Priorität sind.

In vorliegendem Beispiel sind ein Schwarz-Weiß-Foto und ein Farbfoto der Anlage vorhanden. Für den Fall, dass sich die Anlage oder ein Anlagenteil in einem funktionstüchtigen Zustand befindet, wird das Farbfoto der Anlage bzw. des Anlagenteils gezeigt. Als Wichtung für die Funktionsfähigkeit der Anlage wird beispielsweise die Summe der Prioritäten der in einem Bereich aktiven Alarme verwendet. Ist beispielsweise die Summe der Prioritäten der aktiven Alarme 0, wird Farbfoto gezeigt, ist die Summe der Prioritäten der aktiven Alarme 100 wird das Schwarz-Weiß-Foto gezeigt und liegt die Summe der Prioritäten der aktiven Alarme zwischen 0 und 100 wird ein entsprechend gemorphtes Bild aus beiden Fotos gezeigt. Die vorab beschriebene Visualisierung der Anlage ist auch zur Darstellung eines entsprechenden Ausschnitts aus der Gesamtanlage einsetzbar.

## Patentansprüche

1. Anzeigesystem zur grafischen Darstellung von Alarmmeldungen aus Messwerten einer technischen Anlage oder eines technischen Prozesses mit einer Verarbeitungseinrichtung (1), wobei
• die Messstellen der Messwerte jeweils eine hierarchisch strukturierte Kennzeichnung aufweisen, und
• die hierarchisch strukturierten Kennzeichnungen der Messstellen in der Verarbeitungseinrichtung (1) abgelegt sind,
**dadurch gekennzeichnet, dass**
• die Verarbeitungseinrichtung (1) die hierarchisch strukturierten Kennzeichnungen der Messstellen in Hierarchiestufen unterschiedlicher Wertigkeit zerlegt und die Kennzeichnung der Hierarchiestufe der jeweiligen Messstelle mit der höchsten Wertigkeit auswählt und die ausgewählten Kennzeichnungen einer vorkonfigurierten Massenalarmanzeigeeinheit (2) übermittelt,
• die Massenalarmanzeigeeinheit (2) ein Übersichtsbild der technischen Anlage oder des technischen Prozesses als eine Bitmap in Form einer Zeichnung oder eines Fotos darstellt, wobei das Übersichtsbild in einzelne Bereiche gegliedert ist und die Bereiche des Übersichtsbildes dahingehend vorkonfiguriert sind, dass jedem Bereich eine eindeutige Bereichskennzeichnung zugeordnet ist,
• die Massenalarmanzeigeeinheit (2) die ausgewählten Kennzeichnungen einer entsprechenden Bereichskennzeichnung innerhalb des Übersichtsbildes zuordnet, und die aus den Messwerten generierten Alarmmeldungen unter Berücksichtigung der erzeugten Zuordnung der ausgewählten Kennzeichnungen der Messstellen zum entsprechend gekennzeichneten Bereich innerhalb des Übersichtsbildes der Anlage oder des Prozesses durch eine visuelle Veränderung des Bereiches mit einem entsprechenden Computergraphikeffekt visualisiert.

2. Anzeigesystem nach Anspruch 1, wobei der Computergraphikeffekt ist: ein Anfärben eines Schwarz-Weiß-Bildes, die Darstellung der Bereiche mittels Unschärfen, ein Aufhellen bzw. Verdunkeln der entsprechenden Bereiche, ein Morphing von Bitmaps, ein Einfärben oder eine Musterüberlagerung.

3. Anzeigesystem nach einem der Ansprüche 1 oder 2, wobei das Übersichtsbild ein Gesamtbild oder die Darstellung eines Ausschnitts der technischen Anlage oder des technischen Prozesses ist.

4. Anzeigesystem nach einem der vorhergehenden Ansprüche, wobei die technische Anlage ein Kraftwerk ist und die Bereichskennzeichnung entsprechend einem Kraftwerk-Kennzeichnungssystem (KKS) zugeordnet ist.

5. Anzeigesystem nach Anspruch 4, wobei nur KKS-Hauptgruppen verwendet werden.

6. Anzeigesystem nach einem der vorhergehenden Ansprüche, wobei die Bereiche des Übersichtsbildes einander überlappen.

7. Anzeigesystem nach einem der vorhergehenden Ansprüche, wobei die Massenalarmanzeigeeinheit (2) zur Darstellung von Massenalarmen, insbesondere von Prozessalarmen, vorgesehen ist.

8. Verfahren zur grafischen Darstellung von Alarmmeldungen aus Messwerten einer technischen Anlage oder eines technischen Prozesses mit einer Verarbeitungseinrichtung (1), wobei
• den Messstellen der Messwerte der technischen Anlage oder des technischen Prozesses jeweils eine hierarchisch strukturierte Kennzeichnung zugewiesen werden, und
• die hierarchisch strukturierten Kennzeichnungen der Messstellen in der Verarbeitungseinrichtung (1) abgelegt werden,
**dadurch gekennzeichnet, dass**
• mittels der Verarbeitungseinrichtung (1) die hierarchisch strukturierten Kennzeichnungen der Messstellen jeweils in Hierarchiestufen unterschiedlicher Wertigkeit zerlegt, die Kennzeichnung der Hierarchiestufe der jeweiligen Messstelle mit der höchsten Wertigkeit ausgewählt wird und die ausgewählten Kennzeichnungen einer vorkonfigurierten Massenalarmanzeigeeinheit (2) übermittelt werden,
• auf der Massenalarmanzeigeeinheit (2) ein Übersichtsbild der technischen Anlage oder des technischen Prozesses als eine Bitmap in Form einer Zeichnung oder eines Fotos dargestellt wird, wobei das Übersichtsbild in einzelne Bereiche gegliedert ist und die Bereiche des Übersichtsbildes dahingehend vorkonfiguriert sind, dass jedem Bereich eine eindeutige Bereichskennzeichnung zugeordnet ist,
• die ausgewählten Kennzeichnungen einer entsprechenden Bereichskennzeichnung innerhalb des Übersichtsbildes zugeordnet wird, und
• die aus den Messwerten generierten Alarmmeldungen unter Berücksichtigung der erzeugten Zuordnung der ausgewählten Kennzeichnungen der Messstellen zum entsprechend gekennzeichneten Bereich innerhalb des Übersichtsbildes der Anlage oder des Prozesses durch eine visuelle Veränderung des Bereiches mit einem entsprechenden Computergraphikeffekt visualisiert werden.

9. Verfahren nach Anspruch 8, wobei festgelegt ist, mit welchen visuellen Computergraphikeffekten die Bereiche anstehende Prozesszustände visualisieren.

10. Verfahren nach Anspruch 9, wobei der jeweilige Computergraphikeffekt nach einer festgelegten Abbildungsvorschrift in die entsprechenden Bereiche des Übersichtsbildes übertragen wird.

11. Verfahren nach einem der Ansprüche 8 bis 10, wobei die technische Anlage ein Kraftwerk ist und die Bereichskennzeichnung entsprechend einem Kraftwerk-Kennzeichnungssystem (KKS) zugeordnet ist, wobei nur KKS-Hauptgruppen verwendet werden

12. Verfahren nach Anspruch 11, wobei die Abbildungsvorschrift ist die Anzahl der Alarme pro Zeitintervall in der entsprechenden Hauptgruppe, die Anzahl der manuellen Eingriffe pro Zeitintervall oder die Priorität des aktuell anstehenden Alarms mit der höchsten Priorität.

13. Verfahren nach einem der Ansprüche 11 oder 12, wobei eine Gruppierung der Alarmmeldungen ausgeführt wird.

14. Verfahren nach einem der Ansprüche 8 bis 13, wobei die Alarmmeldungen unterschiedlich gewichtet werden.

## Claims

1. Display system for graphically displaying alarm signals from measurement values of a technical facility or a technical process having a processing device (1), wherein
• the test points of the measurement values have in each case a hierarchically structured identifier, and
• the hierarchically structured identifiers of the test points are stored in the processing device (1),
**characterized in that**
• the processing device (1) splits the hierarchically structured identifiers of test points into hierarchy levels of different weighting and selects the identifier of the hierarchy level of the respective test point having the highest weighting and transmits the selected identifiers to a preconfigured large-scale-alarm display unit (2),
• the large-scale-alarm display unit (2) displays an overview image of the technical facility or of the technical process as a bitmap in the form of a drawing or of a photo, wherein the overview image is structured into individual areas and the areas of the overview image are preconfigured with the aim that to each area an unambiguous area identifier is allocated,
• the large-scale-alarm display unit (2) allocates the selected identifiers to a corresponding area identifier within the overview image and the alarm signals generated from the measurement values are visually displayed, taking into consideration the generated allocation of the selected identifiers of the test points to the correspondingly identified area within the overview image of the facility or of the process by means of a visual change of the area with a corresponding computer graphics effect.

2. Display system according to Claim 1, wherein the computer graphics effect is: colouring of a black-white image, representing the area by means of blurred sections, lightening or darkening the corresponding areas, morphing of bitmaps, colouring or superimposing a pattern.

3. Display system according to one of Claims 1 or 2, wherein the overview image is a total image or the representation of a section of the technical facility or of the technical process.

4. Display system according to one of the preceding claims, wherein the technical facility is a power station and the area identifier is allocated in accordance with a power station identification system (KKS).

5. Display system according to Claim 4, wherein only main KKS groups are used.

6. Display system according to one of the preceding claims, wherein the areas of the overview image overlap one another.

7. Display system according to one of the preceding claims, wherein the large-scale-alarm display unit (2) is provided for displaying large-scale alarms, especially process alarms.

8. Method for graphically displaying alarm signals from measurement values of a technical facility or of a technical process, comprising a processing device (1), wherein
• a hierarchically structured identifier is in each case assigned to the test points of the measurement values of the technical facility or of the technical process, and
• the hierarchically structured identifiers of the test points are stored in the processing device (1) ,
**characterized in that**
• by means of the processing device (1), the hierarchically structured identifiers of the test points are in each case split into hierarchy levels of different weighting, the identifier of the hierarchy level of the respective test point having the highest weighting is selected and the selected identifiers are transmitted to a preconfigured large-scale-alarm display unit (2),
• on the large-scale-alarm display unit (2) an overview image of the technical facility or of the technical process is displayed as a bitmap in the form of a drawing or of a photo, wherein the overview image is structured into individual areas and the areas of the overview image are preconfigured with the aim that an unambiguous area identifier is allocated to each area,
• the selected identifiers are allocated to a corresponding area identifier within the overview image, and
• the alarm signals generated from the measurement values are visually displayed by means of a visual change of the area with a corresponding computer graphics effect, taking into consideration the generated allocation of the selected identifiers of the test points to the correspondingly identified area within the overview image of the facility or of the process.

9. Method according to Claim 8, wherein it is specified by means of which visual computer graphics effects the areas visually display existing process states.

10. Method according to Claim 9, wherein the respective computer graphics effect is transferred into the corresponding areas of the overview image in accordance with a specified imaging rule.

11. Method according to one of Claims 8 to 10, wherein the technical facility is a power station and the area identifier is allocated in accordance with a power station identification system (KKS), wherein only main KKS groups are used.

12. Method according to Claim 11, wherein the imaging rule is the number of alarms per time interval in the corresponding main group, the number of manual interventions per time interval or the priority of the currently existing alarm having the highest priority.

13. Method according to one of Claims 11 or 12, wherein a grouping of the alarm signals is carried out.

14. Method according to one of Claims 8 to 13, wherein the alarm signals are differently weighted.

## Revendications

1. Système d'affichage pour la représentation graphique de messages d'alarme à partir de valeurs mesurées d'une installation technique ou d'un processus technique comprenant un dispositif de traitement (1),
* les points de mesure des valeurs mesurées présentant respectivement une identification structurée de manière hiérarchique et
* les identifications structurées de manière hiérarchique des points de mesure étant stockées dans le dispositif de traitement (1),
**caractérisé en ce que**
* le dispositif de traitement (1) fractionne les identifications structurées de manière hiérarchique des points de mesure en niveaux hiérarchiques de différents poids et sélectionne l'identification du niveau hiérarchique du point de mesure correspondant ayant le poids le plus élevé et communique les identifications sélectionnées à une unité d'affichage d'alarme générale (2) préconfigurée,
* l' unité d'affichage d'alarme générale (2) représente une image d'ensemble de l'installation technique ou du processus technique en tant qu'image par points sous la forme d'un dessin ou d'une photo, l'image d'ensemble étant partagée en zones individuelles et les zones de l'image d'ensemble étant préconfigurées de telle sorte qu'une identification de zone univoque est associée à chaque zone,
* l'unité d'affichage d' alarme générale (2) associe aux identifications sélectionnées une identification de zone correspondante à l'intérieur de l'image d'ensemble et visualise les messages d'alarme générés à partir des valeurs mesurées en tenant compte de l'association générée des identifications sélectionnées des points de mesure à la zone identifiée correspondante à l'intérieur de l'image d'ensemble de l'installation ou du processus par une modification visuelle de la zone avec un effet d'infographie correspondant.

2. Système d'affichage selon la revendication 1, avec lequel l'effet d'infographie est : une coloration d'une image en noir et blanc, la représentation des zones au moyen de flous, un éclaircissement ou un assombrissement des zones correspondantes, une morphose des images en points, une coloration ou la superposition d'un modèle.

3. Système d'affichage selon l'une des revendications 1 ou 2, avec lequel l'image d'ensemble est une image totale ou la représentation d'une portion de l'installation technique ou du processus technique.

4. Système d'affichage selon l'une des revendications précédentes, avec lequel l'installation technique est une centrale électrique et l'identification de zone est associée conformément à un système d'identification de centrale électrique (KKS).

5. Système d'affichage selon la revendication 4, avec lequel seuls sont utilisés les groupes principaux du KKS.

6. Système d'affichage selon l' une des revendications précédentes, avec lequel les zones de l'image d'ensemble se chevauchent mutuellement.

7. Système d'affichage selon l' une des revendications précédentes, avec lequel l'unité d'affichage d'alarme générale (2) est prévue pour la représentation d'alarmes générales, notamment des alarmes de processus.

8. Procédé de représentation graphique de messages d'alarme à partir de valeurs mesurées d'une installation technique ou d'un processus technique comprenant un dispositif de traitement (1),
* une identification structurée de manière hiérarchique étant respectivement affectée aux points de mesure des valeurs mesurées de l'installation technique ou du processus technique et
* les identifications structurées de manière hiérarchique des points de mesure étant stockées dans le dispositif de traitement (1),
**caractérisé en ce que**
* les identifications structurées de manière hiérarchique des points de mesure sont respectivement fractionnés en niveaux hiérarchiques de différents poids au moyen du dispositif de traitement (1), l'identification du niveau hiérarchique du point de mesure correspondant ayant le poids le plus élevé est sélectionnée et les identifications sélectionnées sont communiquées à une unité d'affichage d'alarme générale (2) préconfigurée,
* une image d'ensemble de l'installation technique ou du processus technique en tant qu'image par points sous la forme d'un dessin ou d'une photo est représentée sur l'unité d'affichage d'alarme générale (2), l'image d'ensemble étant partagée en zones individuelles et les zones de l'image d'ensemble étant préconfigurées de telle sorte qu'une identification de zone univoque est associée à chaque zone,
* une identification de zone correspondante à l' intérieur de l'image d'ensemble est associée aux identifications sélectionnées et
* les messages d'alarme générés à partir des valeurs mesurées sont visualisés en tenant compte de l'association générée des identifications sélectionnées des points de mesure à la zone identifiée de manière correspondante à l'intérieur de l'image d'ensemble de l'installation ou du processus par une modification visuelle de la zone avec un effet d'infographie correspondant.

9. Procédé selon la revendication 8, selon lequel les effets d'infographie visuels avec lesquels sont visualisées les zones des états en suspens du processus sont définis.

10. Procédé selon la revendication 9, selon lequel l'effet d'infographie correspondant est transmis dans les zones correspondantes de l'image d'ensemble d'après une consigne de représentation définie.

11. Procédé selon l'une des revendications 8 à 10, selon lequel l'installation technique est une centrale électrique et l'identification de zone est associée conformément à un système d'identification de centrale électrique (KKS), seuls étant utilisés les groupes principaux du KKS.

12. Procédé selon la revendication 11, selon lequel la consigne de représentation est le nombre d'alarmes par intervalle de temps dans le groupe principal correspondant, le nombre d'interventions manuelles par intervalle de temps ou la priorité de l'alarme actuellement en suspens ayant la priorité la plus élevée.

13. Procédé selon l'une des revendications 11 ou 12, selon lequel un groupement des messages d'alarme est effectué.

14. Procédé selon l'une des revendications 8 à 13, selon lequel les messages d'alarme ont des poids différents.
